# EUROPÄISCHE PATENTANMELDUNG

(11) **EP 1 393 792 A1**
(43) Veröffentlichungstag der Anmeldung: **03.03.2004**
(21) Anmeldenummer: 03017995.6
(22) Anmeldetag: 07.08.2003
(51) Int. Cl.: B01D 25/172

(54) **Filterpresse**

(30) Priorität: 08.08.2002 DE 10236313
(71) Anmelder: Erich Netzsch GmbH & Co. Holding KG, D-95100 Selb (DE)
(72) Erfinder: Scharnagl, Reinhard, 95666 Mitterteich (DE)

(57) **Zusammenfassung**

Die Erfindung betrifft eine Filterpresse (25) bei der die Lage der Filterplatten bzw. des gesamten Filterplattenpakets überwacht werden soll, um einer Zerstörung einzelner oder aller Filterplatten bzw. der gesamten Filterpresse vorzubeugen. Dazu ist eine Überwachungseinrichtung für die korrekte Lage der der Druckplatte (32) entferntesten Filterplatte vorgesehen, die aus mindestens zwei Abtastelementen (38,40) besteht, die zwischen einer Traverse (14) und dieser Filterplatte (20) angeordnet sind.

## Beschreibung

Die Erfindung betrifft eine Filterpresse mit
- einem Pressengestell, das Führungen aufweist,
- einer Vielzahl von Filterplatten, die querstehend zur Filterpressenlängsachse an Halterungen angeordnet sind
- und einer Druckplatte, die die Filterplatten während des Filtriervorgangs aneinanderdrückt

Bei Filterpressen sind die Filterplatten jeweils zwischen einer ortsfesten Kopfplatte und einer längs der Führungen bewegbaren Schiebeplatte zu einem Paket zusammengespannt. Nach dem Filtrieren wird die Schiebeplatte vom Filterplattenpaket weg bewegt und die einzelnen Filterplatten werden nacheinander zur Schiebeplatte hin verschoben, damit zwischen je zwei Filterplatten gebildete Filterkuchen herausfallen können. Zum Verschieben der Filterplatten werden die beiden Schlitten automatisch und gleichzeitig in Längsrichtung der Führungen hinund herbewegt, wobei vorgesehen ist, daß sie jeweils nur eine Filterplatte an ihren beiden Halterungen greifen und sie am Ende des Verschiebeweges gegen die Schiebeplatte bzw. eine zuvor transportierte Filterplatte drücken. Dabei steigt die Verschiebekraft steil an, und dieser Anstieg wird zum automatischen Umsteuern der Antriebseinrichtung für die Schlitten verwendet. Entsprechendes geschieht, wenn die Schlitten am Ende ihres Rückweges gegen die nächste zu verschiebende Filterplatte stoßen, wobei an den Schlitten angeordnete Mitnehmer hinter je einer Halterung der zu verschiebenden Filterplatte einrasten, so daß die Filterplatte nach dem Umsteuern des Antriebs der Schlitten von diesen mitgenommen wird.

Es ist bekannt, daß an Filterpressen der genannten Gattung Störungen auftreten können, wenn von den beiden Schlitten nur einer mit seinem Mitnehmer hinter dem zugehörigen Arm der als nächstes mitzunehmenden Filterplatte einrastet und anschließend nur dieser Schlitten die Filterplatte mitnimmt. Um solche Störungen zu vermeiden, hat man es bisher für ausreichend gehalten, den Vorgang des Einrastens der Mitnehmer beider Schlitten an dem jeweils zugehörigen Arm der als nächstes zu verschiebenden Filterplatte zu überwachen.

Die EP-A 0 114 097 bezieht sich auf eine Filterpresse und insbesondere deren Verschiebevorrichtung. zum Transport der Filterplatten. Zur Sicherstellung des störungsfreien Transports ist die Vorrichtung mit einer optischen Überwachung versehen. Dazu sind an beiden Seiten der Führungen, entlang derer die Filterplatten bewegt werden, optische Überwachungseinrichtungen vorgesehen, die das Greifen und Steuern der Verschiebevorrichtung überwachen. Diese Überwachungseinrichtung besteht aus einem Sender und einem Empfänger für infrarotes Licht, die jeweils am gegenüberliegenden Ende der Filterpresse angeordnet sind. Zwischen dem Sender und Empfänger ist eine drehbare Blende an der Filterplattentransportvorrichtung angeordnet. Fährt die Transportvorrichtung auf das Filterplattenpaket auf, so legt sich ein Sternrad, das mit der Blende verbunden ist, um einen Stift an der Filterplattenaufhängungen. Durch den Widerstand der Stifte drehen sich die Blenden, so daß das infrarote Licht vom Sender zum Empfänger gelangt. Ein daraus erzeugter Impuls ändert die Drehrichtung des Motors der Filterplattentransportvorrichtung und der Mitnahmeschlitten zieht die jeweils letzte vom Sternrad gehaltene Filterplatte vom Filterplattenpaket ab.

Es genügt jedoch nicht unbedingt, den Filterplattentransport davon abhängig zu machen, daß Mitnehmer beider Schlitten hinter je einem Filterplattenarm eingerastet sind. Beschädigungen der Arme oder der Mitnehmer können nämlich dazu führen, daß ein zunächst richtig erfaßter Arm sich während des Transports vom Mitnehmer löst, so daß die Filterplatte auf der Seite, an der dieser Arm angeordnet ist, stehenbleibt, während sie auf der Seite des anderen Arms weiterhin mitgenommen wird, sich also schiefstellt. Ein anderer möglicher Grund für eine Schiefstellung kann auch darin bestehen, daß an einer an sich korrekt von beiden Schlitten mitgenommenen Filterplatte die nächstfolgende Filterplatte infolge Adhäsion des zwischen diesen beiden Filterplatten gebildeten Filterkuchens zunächst hängenbleibt, sich dann einseitig löst und schließlich schiefstehend auf den Führungen stehenbleibt, während die von beiden Schlitten in der vorgesehenen Weise erfasste Filterplatte weiter verschoben wird.

Für solche Fälle hat man sich bisher darauf verlassen, daß bei der nächsten Bewegung der beiden Schlitten einer von ihnen vor dem anderen gegen die schiefstehende Filterplatte stößt und diese zurechtrückt, sie also wieder in ihre zu den Führungen normale Lage bringt, sofern dafür gesorgt ist, daß der Stoß nicht zu heftig wird. Deshalb hat man gemäß DE A 27 58 545 die Mitnehmer in Längsrichtung der Holme federnd auf den Schlitten angeordnet und sich im übrigen wiederum damit begnügt, das Einrasten der Mitnehmer hinter je einem Arm der mitzunehmenden Filterplatte zu überwachen.

Aus der DE 3636799 A1 gehen ein Verfahrung und eine Vorrichtung zur Überwachung des Filterplattenanlagedruckes hervor. Beim Betrieb einer Filterpresse muß während des Filtrationsvorganges die Abdichtung der einzelnen Filterkammern durch entsprechenden Druck an den Dichtflächen gewährleistet werden. Die Überwachung dieses Schließdruckes, der zwischen allen Filterplatten herrschen muß, geschieht hierbei Überwachung der Kompressionskraft im Filterplattenpaket. Dazu wird der Kompressionsdruck einer Filterplatte oder die Stellung der Kopfplatte ausgewertet.

Die Erfindung beruht auf der Erkenntnis, daß diese bekannten Maßnahmen nicht unter allen Umständen genügen, um erhebliche Störungen und sogar Beschädigungen an Filterpressen zu vermeiden. Eine schiefstehende Filterplatte bildet nämlich auch dann ein erhebliches Störungspotential, wenn sie die Schiebeplatte oder die dort schon angekommenen, zuvor verschobenen Filterplatten erreicht hat. Entgegen bisherigen Annahmen läßt sich eine einmal aufgetretene Schiefstellung einer Filterplatte bei automatischem Betrieb nicht immer vollständig korrigieren. Es kann also vorkommen, daß eine schiefstehend im Bereich der Schiebeplatte angekommene Filterplatte von dem Druck, den die nächste dort ankommende Filterplatte auf sie ausübt, nicht vollständig zurechtgerückt wird, also ihre zu den Führungen in Form von Holmen normale gewünschte Lage nicht ganz erreicht. Diese Abweichung kann sich bei mehreren aufeinanderfolgenden Filterplatten summieren, so daß später beim Schließen der Filterpresse ein derart krummes Filterplattenpaket entsteht, daß einzelne Filterplatten durch den Pressendruck zerstört werden oder das gesamte Paket ausknickt, wobei die Holme verbogen und mehrere Filterplatten zerstört werden können.

Der Erfindung liegt die Aufgabe zugrunde, vor dem Aufbau des Schließdrucks auf das Filterplattenpaket sicherzustellen, daß das Filterplattenpaket sowohl vertikal als auch horizontal keine Schräglage eingenommen hat.

Die erfindungsgemäße Aufgabe wird durch die Merkmale des 1. Anspruchs gelöst. Erfindungsgemäße Weiterbildungen gehen aus den Merkmalen der Unteransprüche hervor.

Entsprechend einer Weiterbildung der Erfindung kommt die Überwachungseinrichtung bei Filterpressen mit zwei seitlichen Führungen, auch Holme genannt, zum Einsatz. Bei dieser Art Filterpresse sitzen die Filterplatten mit ihren beiden seitlich abstehenden Halterungen auf den Führungen. Die Abtastelemente sind hier im Bereich der Halterungen angeordnet, die auch als Arme bezeichnet werden. Somit sind die Arme hier gleichzeitig als Schaltelement eingesetzt, anhand dessen der Abstand zur Traverse und damit die erforderliche Parallelität festgestellt werden kann.

Eine weitere Ausgestaltung der Erfindung bezieht sich auf die Überwachung der korrekten Filterplattenstellung bei Brückenholmpressen. Die Filterplatten sind hierbei über Kopf an einem Holm oder zwei Holmen beweglich aufgehängt. Verschiedentlich kommt es bei diesem Bautyp zu Anlagerungen im unteren Filterplattenbereich, weshalb das Plattenpaket unten nach vorne aus der senkrechten Lage gedrückt wird. Da auch diese vertikale Lageabweichung zur Zerstörung einzelner oder mehrerer Filterplatten bzw der Führungen führen kann, ist insbesondere bei hängenden Filterplatten sowohl eine Überwachung der senkrechten Position der Filterplatte als auch der in der Waagrechten möglichen Schrägstellung vorgesehen aus der sich die parallele Anordnung der letzten Filterplatte vor der Traverse zu dieser ergibt. Dazu sind am Brückenholm oder an der Traverse, an der das Filterplattenpaket zur Anlage kommt, Abtastelemente angeordnet. Diese Abtastelemente in Form von mechanischen Schaltern, elektrischen/elektronischen Näherungsschaltern und dgl. werden von Schaltfahnen in Form von Blenden, Stiften, Bolzen oder den Filterplattenhalterungen betätigt. Dazu weisen die Filterplatten entsprechende Elemente an ihren Schmalseiten in deren oberem oder unterem Bereich auf.

Ein Ausführungsbeispiel der Erfindung wird im folgenden anhand einer schematischen Zeichnung erläutert. Es zeigt
Fig. 1 eine Draufsicht auf eine Filterpresse
Fig. 2 eine Seitenansicht einer Brückenholmpresse
Fig. 3 eine Draufsicht auf eine Brückenholmpresse

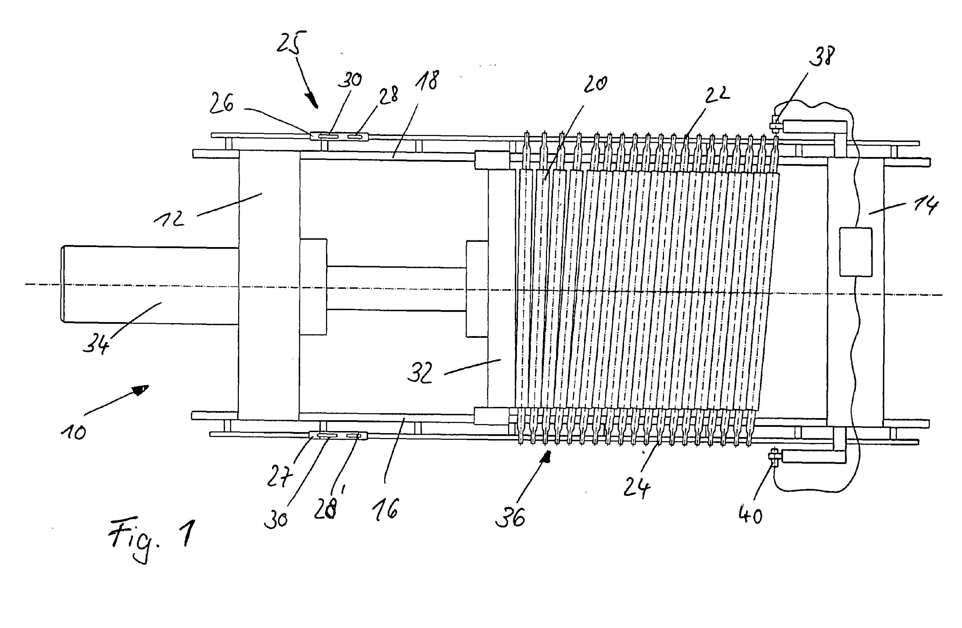

Die in Fig. 1 dargestellte Filterpresse hat ein Pressengestell 10 mit einem Paar Traversen 12, 14 und zwei Holmen 16, 18, die parallel zueinander angeordnet sind. Auf den Holmen 16, 18 liegen die beiden eine Filterplatte 20 tragenden Arme 22, 24. Die Filterplatten 20 werden von einer Transportvorrichtung verschoben worin Schlitten 26 jeweils an den gegenüberliegenden Seiten der Filterplatten 20 im Bereich der Arme 22, 24 angeordnet sind. Die Schlitten weisen Mitnehmer 28, 28' und Anfahrklinken 30, 30' auf. Beim Entleeren der Filterpresse befindet sich die Druckplatte 32, die an der Kolbenzylindereinheit 34 befestigt ist, dicht an der Traverse 12. Das Filterplattenpaket 36 wird dann von der rechten Seite der Filterpresse einzeln von der Transportvorrichtung 25 mit ihren Schlitten 26 und deren Mitnehmer 28, 28' und Anfahrklinken 30, 30' auf die linke Seite der Filterpresse transportiert. Während des Transports der Filterplatten fällt das gepresste und entwässerte Material in Form eines Filterkuchens von den Filterplatten ab, die mit Filtertüchern belegt sind. Ist die Filterpresse entleert, so drückt die Kolbenzylindereinheit 34 das gesamte Filterplattenpaket 36 zurück in die rechte Stellung in der die Filterplatten unter hohem Druck aneinandergepreßt und somit abgedichtet aneinandergereiht sind.

Da es während des Öffnens oder Schließens des Filterplattenpaketes zu Verschiebungen (Schiefstellungen) der Filterplatten 20 kommen kann und diese beim Beaufschlagen des gesamten Paketes mit Druck zur Zerstörung der Filterplatten oder der gesamten Presse führen können, wird die Stellung der Filterplatten überwacht. Da sich eine Schiefstellung der Platten in der Regel beim Transport oder beim Schließen nicht mehr ausgleicht, muß der Druckaufbau, sofern die der Traverse 14 nächststehende Filterplatte eine Schieflage eingenommen hat, abgebrochen werden. Zur Überwachung der parallelen Lage der ersten bzw. letzten Filterplatte zu der ihr benachbarten Traverse 14 sind zwei Abtastelemente 38, 40 in Form von Nährerungsinitiatoren angeordnet, die den elektrohydraulischen Antrieb der Kolbenzylindereinheit 34 sofort abschalten, sofern nicht beide Initiatoren gleichzeitig ein positives Signal beim Abtasten der Arme 22, 24 abgeben. Die Abtastung kann auch durch eine entsprechende Plazierung von elektromechanischen Endschaltern oder anderen zur Abstandsmessung bzw Abstandsüberwachung einsetzbaren Elementen geschehen. Die Signale werden über entsprechende Leitungen an die Steuerung der Kolbenzylindereinheit weitergegeben. Tritt ein Störfall auf, so fährt die Kolbenzylindereinheit 34 in ihre Ruhestellung und das Filterplattenpaket wird geöffnet und die Filterplatten gesäubert oder neu geordnet.

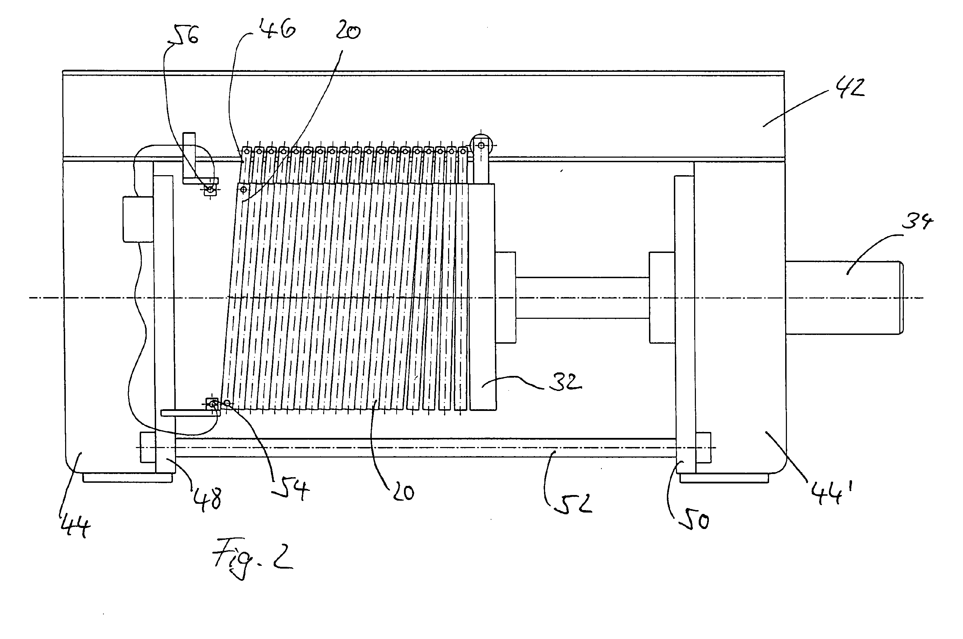

Fig. 2 zeigt eine Filterpresse mit an Brückenholmen 42, 42' aufgehängten Filterplatten 20. Die Brückenholme 42, 42' liegen auf zwei Endplatten 44, 44' auf. Die Filterplatten sind über Kopf mittels der Halterungen 46 am Brückenholm aufgehängt. Die Kolbenzylindereinheit schiebt das gesamte Paket an Filterplatten 20 gegen die Platte 48. Diese Platte 48 und die Platte 50 sind durch Zuganker 52 miteinander verspannt. Gerät die vorderste Filterplatte 20 in eine Schieflage, so entsteht zuerst mit den unteren Abtastelementen 54 ein Kontakt. Da die oberen Abtastelemente 56 nicht gleichzeitig kontaktiert werden, erkennt die Steuerung eine Fehlstellung und unterbricht die Schließbewegung des Filterplattenpakets.

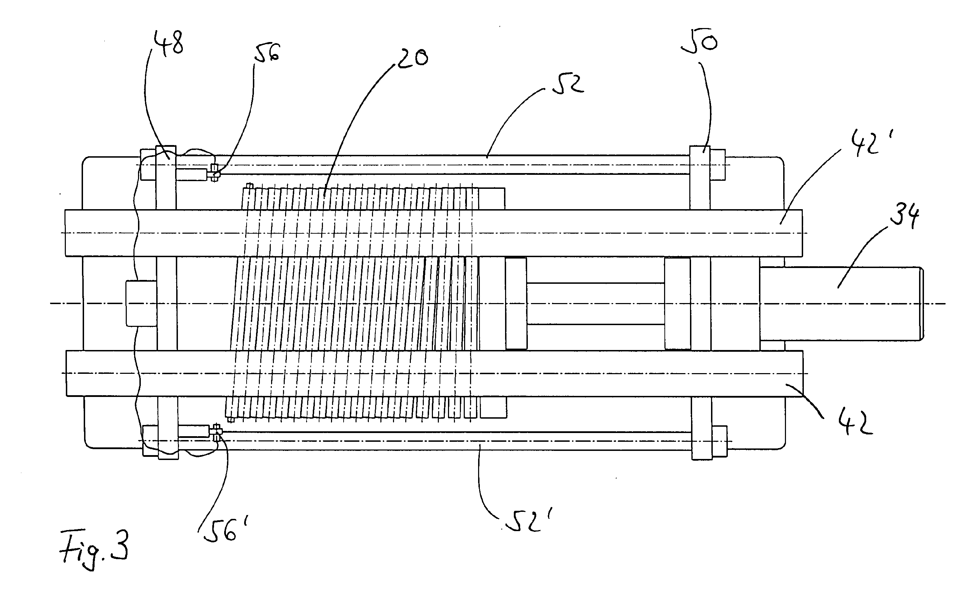

Fig. 3 zeigt die oberen Abtastelemente. 56, 56', die in diesem Ausführungsbeispiel eine mögliche Schrägstellung der vordersten Filterplatte überwachen. Das von oben einsehbare Filterplattenpaket zeigt vier leicht voneinander abgespreizte Filterplatten, die die Schrägstellung der vordersten Filterplatte bewirken.

Die Steuerung erkennt demnach durch die eingehenden Signale von den oberen und unteren Abtastelementen 56, 56' und 54, 54' sowohl eine unerwünschte Neigung als auch eine unerwünschte Schrägstellung der Filterplatte, wodurch eine frühzeitige Reaktion der Steuerung ein Zerstören von Filterplatten oder Presse verhütet.

### Bezugsziffernliste

- 10: Pressengestell
- 12: Traversen
- 14: Traversen
- 16: Holm
- 18: Holm
- 20: Filterplatte
- 22: Filterplattenarme
- 24: Filterplattenarme
- 26: Schlitten
- 28: Mitnehmer
- 30: Anfahrklinken
- 32: Druckplatte
- 34: Kolbenzylindereinheit +
- 36: Filterplattenpaket
- 38: Abtastelemente
- 40: Abtastelemente
- 42, 42': Brückenholme
- 44, 44': Endplatten
- 46: Halterung
- 48: Platte
- 50: Platte
- 52, 52': Zuganker
- 54: Abtastelement
- 56: Abtastelement

## Patentansprüche

1. Filterpresse mit
- einem Pressengestell (10), das Führungen (16,18) aufweist,
- einer Vielzahl von Filterplatten (20), die querstehend zur Filterpressenlängsachse an Halterungen (22, 24) angeordnet sind
- und einer Druckplatte (32), die die Filterplatten während des Filtriervorgangs aneinanderdrückt
**dadurch gekennzeichnet,**
**daß** eine Überwachungseinrichtung für die parallele Lage der Filterplatte (20), die zur Druckplatte am entferntesten angeordnet ist und der ihr direkt benachbarten Traverse (14)vorgesehen ist, die aus mindestens zwei Abtastelementen (38, 40, 54, 56, 56') besteht, die zwischen der Traverse (14) und dieser Filterplatte (20) angeordnet sind.

2. Filterpresse nach Anspruch 1,
**dadurch gekennzeichnet,**
**daß** die Abtastelemente (38, 40, 54, 56, 56',) im Bereich der Halterungen der Filterplatten (20) angeordnet sind.

3. Filterpresse nach Ansprüche 1 oder 2,
**dadurch gekennzeichnet,**
**daß** die Abtastelemente (38, 40) aus je mindestens zwei Näherungsschaltern bestehen, die die Kolbenzylindereinheit (34) stillsetzen, wenn diese nicht gleichzeitig Kontakt mit den Halterungen einer Filterplatte (20) haben.

4. Filterpresse nach einem der vorhergehenden Ansprüche 1 bis 2
**dadurch gekennzeichnet,**
**daß** die Überwachungseinrichtung mit dem Antrieb der Kolbenzylindereinheit (34) für die Druckplatte (32) verbunden ist und diesen bei einer Fehlstellung der letzten Filterplatte (20) stillsetzt.

5. Filterpresse nach einem der vorhergehenden Ansprüche 1 bis 4
**dadurch gekennzeichnet,**
**daß** die Filterplatten (20) an ihrer oberen Seite Halterungen aufweisen, die mit einem Brückenholm verbunden sind, wobei im Bereich zwischen der der Druckplatte entferntesten Filterplatte (20) und der der Druckplatte benachbarten Traverse vier Abtastelemente angeordnet sind, die die vertikale und horizontale Stellung der Filterplatte abtasten.

6. Filterpresse nach einem der vorhergehenden Ansprüche 1 bis 5
**dadurch gekennzeichnet,**
**daß** die Filterplatten (20) Schaltfahnen aufweisen, die den Abtastelementen gegenüberstehen.
